# EUROPÄISCHE PATENTSCHRIFT

(11) **EP 0 530 848 B1**
(45) Veröffentlichungstag und Bekanntmachung des Hinweises auf die Patenterteilung: **07.06.1995**
(21) Anmeldenummer: 92116704.5
(22) Anmeldetag: 07.04.1987
(51) Int. Cl.: B60N 2/44, B60N 2/42, G05G 5/24

(54) **Rückhalteeinrichtung in Fahrzeugen**
Backing apparatus in vehicles
Dispositif de soutien pour véhicules

(30) Priorität: 14.04.1986 DE 3612474; 05.05.1986 DE 3615160
(43) Veröffentlichungstag der Anmeldung: 10.03.1993
(62) Teilanmeldung aus: 87105108.2
(73) Patentinhaber: P.A. Rentrop, Hubbert & Wagner Fahrzeugausstattungen GmbH & Co. KG, 31653 Stadthagen (DE)
(72) Erfinder: Ernst, Hans-Hellmut, D-2070 Ahrensburg (DE)
(74) Vertreter: Thielking, Bodo, Dipl.-Ing.

(56) Entgegenhaltungen:
- CH-A- 375 179
- DE-A- 3 420 103
- FR-A- 668 162
- FR-A- 2 142 097
- US-A- 2 130 140

## Beschreibung

Die Erfindung betrifft eine Rückhalteeinrichtung für Kraftfahrzeugsitze mit einem auf einem Lastträger längenverschiebbar angebrachten Blockierelement mit einer beschleunigungssensitiven Sperre, die bei Ansprechen unerwünschte Relativbewegungen in oder entgegen Fahrtrichtung zwischen dem Lastträger und dem Blockierelement unterbindet, wobei ein mit Sensormasse versehenes Sperrelement vorgesehen ist, das bei Aktivierung in Eingriff mit dem Lastträger gelangt. Eine derartige Einrichtung, die jedoch, bei Ansprechen unerwünschte Relavivbewegung nur in Fahrtrichtung unterbindet, ist aus der FR-A-2 142 097 bekannt.

Die Sitze von Kraftwagen sind zur Einstellung der gewünschten Sitzposition sowohl in der Höhe als auch in der Fahrzeuglängsrichtung verstellbar. Die Kräfte, die von den bekannten Verstellsystemen, welche aus Kosten- und Gewichtsgründen sehr leicht ausgeführt werden, aufgenommen werden können, sind jedoch relativ gering. Die am weitesten verbreiteten Systeme können nicht sicher verhindern, daß bei Unfällen oder Notbremsungen der Sitz aus der Halterung an der Fahrzeugzelle gelöst wird.

Es ist deshalb zur Lösung dieses Problems bereits die im Oberbegriff des Anspruchs 1 beschriebene Lösung bekannt, welche bei Ansprechen der beschleunigungssensitiven Sperre den Lastträger und damit den Fahrzeugsitz in seiner Zuordnung zur Fahrzeugzelle fixiert.

Die bekannte Rückhalteeinrichtung wirkt nur bei einem Abbremsen des Fahrzeugs in Vorwärtsfahrtrichtung.

Ausgehend von diesem Stand der Technik liegt der Erfindung die Aufgabe zugrunde, eine Rückhalteeinrichtung so auszubilden, daß sie bei Überschreiten vorgegebener Beschleunigungswerte unabhängig von der Richtung der auftretenden Beschleunigung wirkt.

Die Lösung dieser Aufgabe erfolgt mit den Merkmalen des Kennzeichnungsteils von Anspruch 1.

Bevorzugte Ausgestaltungen der Erfindung sind in den Unteransprüchen beschrieben.

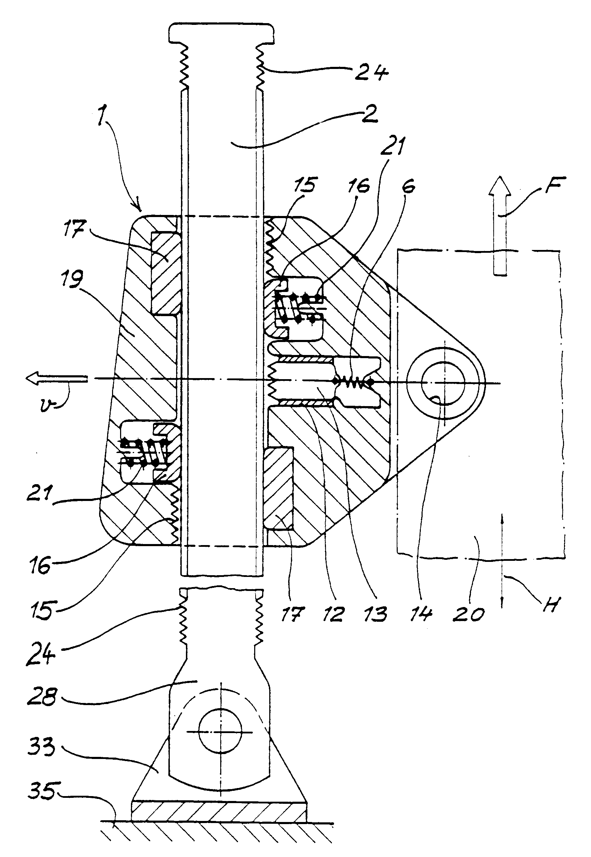

Die Zeichnung zeigt eine schematische, teilweise geschnittene Darstellung einer bevorzugten Ausführungsform der Erfindung.

Mit 35 ist die Fahrzeugzelle bezeichnet, die eine Befestigungslasche 33 trägt. An der Befestigungslasche 33 ist das Befestigungsauge 28 eines als schwenkbare Stange ausgebildeten Lastträgers 2 angelenkt. Der Lastträger 2 wird von einem insgesamt mit 1 bezeichneten Blockierelement umgriffen. Das Blockierelement 1 ist über die Befestigungsbohrung 14, die außermittig zur Verstellachse des Lastträgers 2 liegt, mit der in Richtung des Doppelpfeils H verschiebbaren Masse (Fahrzeugsitz) verbunden. Während die Hauptbewegungsrichtung des Gesamtsystems (Fahrzeug mit Sitz) durch den Pfeil v dargestellt ist, verdeutlicht der Pfeil F die Richtung einer plötzlich im Notfall auftretenden Trägheitskraft der Masse 20, die über den Lastträger 2, dessen Befestigungsauge 28 und die Befestigungslasche 33 in die Fahrzeugzelle 35 abzuleiten ist, ohne daß das Blockierelement 1 seine Lage auf dem Lastträger 2 merklich verändert.

Das Blockierelement umgreift den Lastträger 2, der auf einander gegenüberliegenden Seiten Verzahnungen 24 aufweist. Zwei feste Gleitklötze 17 sind zum Gleiten auf der Verzahnung 24 ausgebildet. Weiterhin sind zwei federvorgespannte Gleitklötze im Gehäuse 19 des Blockierelements 1 vorgesehen und ebenfalls zum Gleiten auf der Verzahnung 24 des Lastträgers ausgebildet, die mittels Sensorfedern 21 gegen die Verzahnungen 24 des Lastträgers gedrückt werden.

Die einander gegenüberliegenden Gleitklötze 17 und 16 stellen ein spielfreies, jedoch ausreichend leitgängiges Verschieben des Blockierelementes 1 auf dem Lastträger 2 sicher.

Der Verzahnung 24 auf dem Lastträger 2 liegen Verzahnungen 15 am Gehäuse 19 gegenüber.

Bei einem Ruck nach oben in Richtung des Pfeiles F an der Masse 20 sprechen die Sensorfedern 21 der Gleitklötze 16 an. Bei einer langsamen Verschiebung des Gehäuses 19 auf dem Lastträger 2, bei der die auftretenden Beschleunigungen ein vorgegebenes Maß nicht überschreiten, tritt keine Blockierung auf. Ein plötzlicher Ruck mit hoher Beschleunigung in Richtung des Pfeils F an der Masse 20 erzeugt wegen der Trägheit des Gehäuses in demselben eine Kippbewegung entgegen dem Urzeigersinn auf dem Lastträger 2. Dadurch greifen die Verzahnungen 15 des Gehäuses 19 in die Verzahnungen 24 des Lastträgers 2 ein und unterbinden Relativbewegungen zwischen dem Blockierelement 1 und dem Lastträger 2.

Mittig im Gehäuse 19 ist in einer reibungsmindernden und korrosionsunempfindlichen Gleithülse 12 des Gehäuses 19 ein Sperrelement 13 vorgesehen, das gleichzeitig als Sensormasse wirkt und von einer Sensorfeder 6 in Ruheposition gehalten wird. Dieses Sperrelement wirkt lediglich in eine Richtung, nämlich in Fahrtrichtung V. Das als Kolben ausgebildete Sperrelement besitzt eine zum Eingriff in die gegenüberliegende Verzahnung 24 des Lastträgers 2 ausgebildete Verzahnung.

Durch die Kippfähigkeit des Gehäuses 19 gegen die Wirkung der Sensorfedern 31 einerseits und durch die Trägheit des Sperrelements 13 gegen die Wirkung der Sensorfeder 6 andererseits ist dieses Hubgesperre doppelt sensitiv.

## Patentansprüche

1. Rückhalteeinrichtung für Kraftfahrzeugsitze mit einem auf einem Lastträger längenverschiebbar angebrachten Blockierelement (1) mit einer beschleunigungssensitiven Sperre, die bei Ansprechen unerwünschte Relativbewegungen in oder entgegen Fahrtrichtung zwischen dem Lastträger (2) und dem Blockierelement (1) unterbindet, wobei ein mit Sensormasse (13) versehenes Sperrelement (13) vorgesehen ist, das bei Aktivierung in Eingriff mit dem Lastträger (2) gelangt,
dadurch gekennzeichnet,
daß das Blockierelement (1) zwei auf gegenüberliegenden Seiten des Lastträgers (2) angeordnete, als Sensoren wirkende Gleitklötze (16) aufweist und kippbar an dem Lastträger (2) gehalten ist, und daß am Gehäuse (19) des Blockierelements (1) angeordnete Verzahnungen (15) bei Überschreiten vorgegebener, auf die Gleitklötze einwirkender Kräfte in Verzahnungen (24) des Lastträgers (2) einrastbar sind.

2. Rückhalteeinrichtung nach Anspruch 1,
dadurch gekennzeichnet,
daß das Sperrelement (13) als gleitend in einer Gehäusebohrung (12) des Gehäuses (19) des Blockierelements (1) gegen die Kraft einer Sensorfeder (6) verschiebbarer Kolben ausgebildet ist.

3. Rückhalteeinrichtung nach Ansprüchen 1 und 2,
dadurch gekennzeichnet,
daß das als Kolben ausgebildete Sperrelement (13) eine zum Eingriff in die Verzahnung (24) des Lastträgers (2) ausgebildete Verzahnung aufweist.

4. Rückhalteeinrichtung nach einem oder mehreren der Ansprüche 1 bis 3,
dadurch gekennzeichnet,
daß die Gleitklötze (16) mittels Sensorfedern (21) in Anlage an dem Lastträger (2) gehalten werden.

## Claims

1. Restraint unit for vehicle seats with a blocking element fitted longitudinally displaceable on a load support and having an acceleration-sensitive lock which when responsive prevents undesired relative movements between the load support and blocking element in or against the travel direction wherein a locking element with sensor mass is provided which when activated passes into engagement with the load support,
characterised in that the blocking element has two slide blocks mounted on opposite sides of the load support and acting as sensors the blocking element is held for tilting movement on the load support, and teeth provided on the housing of the blocking element are designed to engage in teeth on the load support on exceeding predetermined forces which act on the slide blocks.

2. Restraint device according to claim 1
characterised in that the locking element is designed as a piston which can be displaced sliding in a housing bore of the housing of the blocking element against the force of a sensor spring.

3. Restraint device according to claims 1 and 2
characterised in that the locking element designed as the piston has a toothing for engaging in the teeth of the load support.

4. Restraint device according to one or more of claims 1 to 3
characterised in that the slide blocks are held adjoining the load support by means of sensor springs.

## Revendications

1. Dispositif de retenue pour sièges de véhicules automobiles avec un élément de blocage (1) monté, déplaçable longitudinalement, sur un porte-charge et pourvu d'un verrouillage qui, sensible à l'accélération, répond en supprimant les mouvements relatifs, indésirables entre le porte-charge (2) et l'élément de blocage (1), dans le sens de la marche ou le sens inverse, un élément de verrouillage (13) avec une masse sensorielle étant prévu, lequel entre en prise avec le porte-charge (2) lors de l'activation,
caractérisé en ce que
l'élément de blocage (1) présente deux blocs glisseurs (16), disposés sur les côtés opposés du porte-charge (2) et agissant en tant que détecteurs, et est maintenu, basculable, sur le porte-charge (2),
et que des dentures (15), équipant le carter (19) de l'élément de blocage (1), s'enclenchent dans les dentures (24) du porte-charge (2) lorsque des forces prédéfinies, agissant sur les blocs glisseurs (16) sont dépassées.

2. Dispositif de retenue selon la revendication 1,
caractérisé en ce que
l'élément de verrouillage (13) est conçu sous forme de piston déplaçable contre la force d'un ressort détecteur (6) et glissant dans une forure (12), pratiquée dans le carter (19) de l'élément de blocage (1).

3. Dispositif de retenue selon les revendications 1 et 2,
caractérisé en ce que
l'élément de verrouillage (13), conçu sous forme de piston, présente une denture qui entre en prise avec la denture (24) du porte-charge (2).

4. Dispositif de retenue selon l'une ou plusieurs des revendications 1 à 3,
caractérisé en ce que
les blocs glisseurs (16) sont maintenus appuyés sur le porte-charge (2) à l'aide de ressorts détecteurs (21).
